# EUROPEAN PATENT SPECIFICATION

(11) **EP 2 538 015 B1**
(45) Date of publication and mention of the grant of the patent: **29.01.2014**
(21) Application number: 11170515.8
(22) Date of filing: 20.06.2011
(51) Int. Cl.: E06B 9/72, F16D 3/68

(54) **Elastic claw coupling for a tubular drive for a roller shutter**
Elastische Klauenkupplung für einen Rohrmotor eines Rolladenantriebs
Accouplement à griffes élastique pour un moteur tubulaire d'un mécanisme d'entraînement de volets roulants

(43) Date of publication of application: 26.12.2012
(73) Proprietor: Nice Spa, 31046 Oderzo (TV) (IT)
(72) Inventor: Malausa, Andrea, 31046 Oderzo(TV) (IT)
(74) Representative: Citron, Massimiliano

(56) References cited:
- WO-A1-02/48497
- WO-A1-2007/051865
- DE-A1- 1 939 410
- FR-A1- 2 875 258
- US-A- 4 034 575

## Description

The invention relates to an improved operator or gearmotor, of the type used to operate shutters or roller shutters.

W02007051865 describes a tubular gearmotor for roller shutters equipped with a device able to detect obstacles or motion difficulties encountered during the descending or ascending stroke movement of the shutter. The gearmotor has a driver body and a head connectable with each other with angular play. An action on the shutter, such as a collision with an obstacle, makes the relative angular position of the head and drive body vary, which is detected by appropriate sensors. The angular deviation due to the angular play is opposed or limited by elastic elements placed inside the empty space that constitutes the play.

The obstacles detecting device of W02007051865 has several variants, and can be an accessory external to the gearmotor or integrated into it.

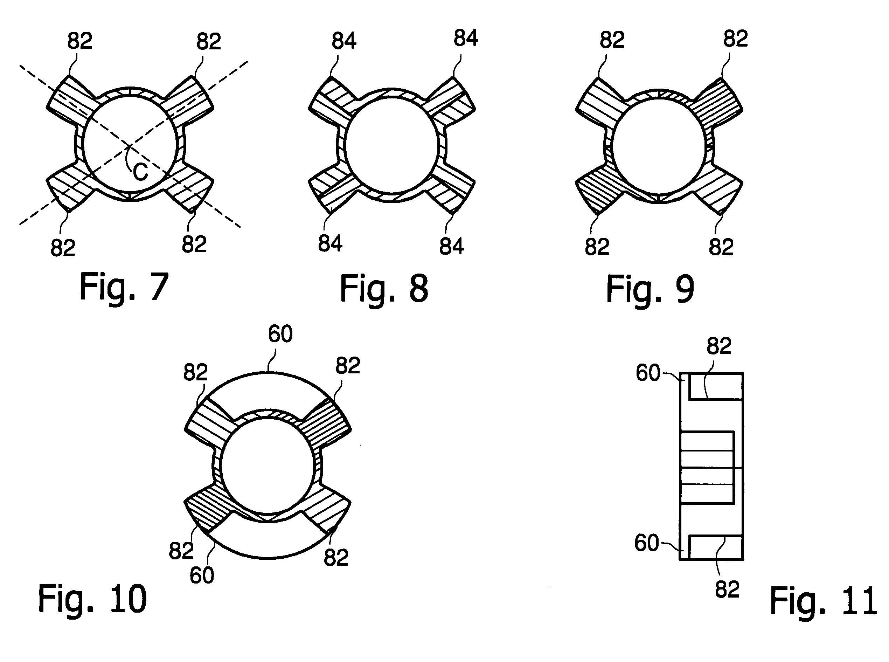

In Figures 7-8 or 13-14 of W02007051865 there are two coaxial sleeves, one on the head and one on a tubular housing, arranged one into another, with introflexions between which elastic elements are placed. The large number of individual elastic elements brings difficulties and time-consuming installation procedures, and their small size does not allow wide design freedom to choose their dynamic elastic response and/or limits the sensitivity of the device and/or poses problems in time.

In Figures 22-23 of W02007051865 the rotational play is achieved through the cooperation of flexible fins arranged on the tubular housing and tucked into grooves of the head. The disadvantage is the polar asymmetry of the fins, due to the need of letting a circular sector free for the passage of electrical cables from the head to the housing. This asymmetry results in an undesirable non-zero net force on the axis of the gearmotor when the housing applies a momentum to the head and the elastic elements are compressed.

The main object of the invention is to provide a gearmotor that solves or reduces one or each of these problems.

In particular, an object is to increase the sensitivity of the obstacle detection device.

Another object is to eliminate or reduce the stresses on the gearmotor axis.

The objects are achieved with an operator according to claim 1.

The concept of the invention and its advantages will be even more clear by the following description of a gearmotor, shown in the drawing in which
Figures 1 and 2 show in perspective view the gearmotor,
Figure 3 shows a side view of a wall-mounted end of the gearmotor,
Figure 4 shows a sectional view according to the plane IV-IV,
Figure 5 and 6 show a sectional view as Figure 4 for the variants,
Fig 7, 8 and 9 show a plan view of variations of an elastic means,
Figure 10 shows another plan view of another variation of an elastic means,
Figure 11 shows the variation in Figure 10 in lateral view.

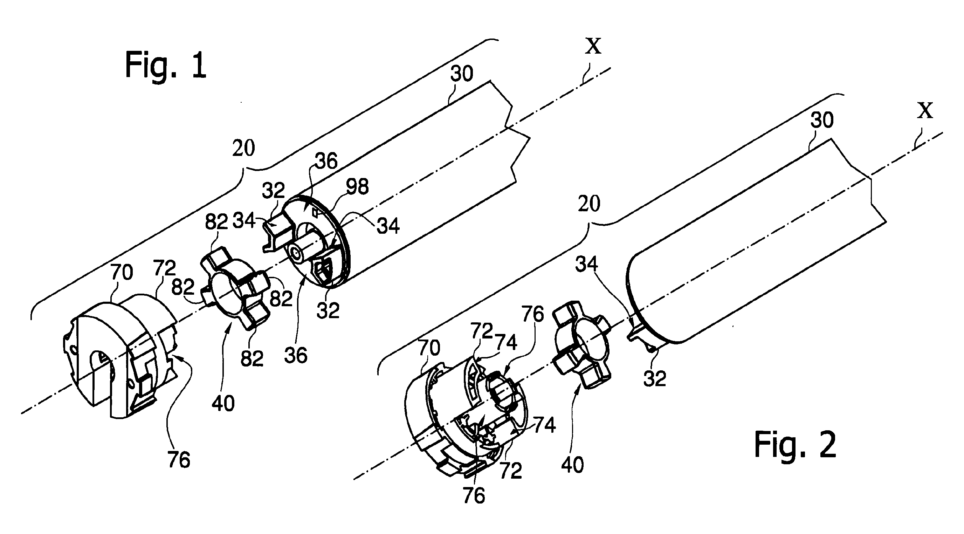

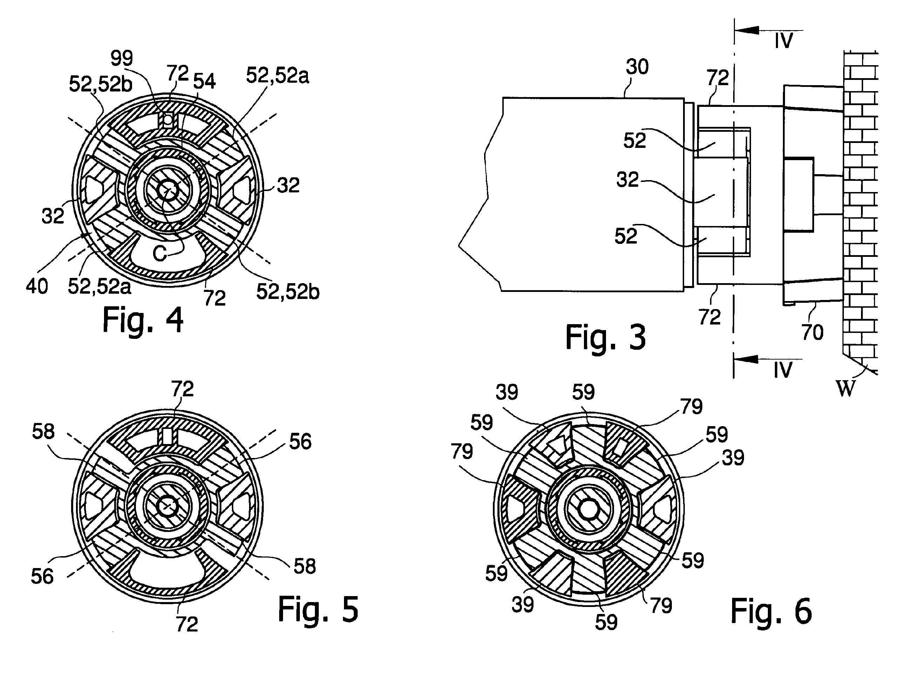

Figure 1 shows a tubular gearmotor 20 comprising a motor body 30, which extends along an axis X, and a head 70 fixable directly, or through an appropriate support of known type (not shown), to a wall W (see Figure 3).

The motor body 30 generally contains an electric motor, a mechanical planetary-gear reducer, and an electronic board (not shown) that controls and drives all the functions of the gearmotor 20. The motor body 30 is connected to the head 70 with a small backlash or play (called Δ), to be able to rotate for a predetermined amount about the axis X, compare WO2007/051865.

The angular displacement Δ of the motor body 30 with respect to the head 70 is monitored by detection means.

Such means may be of a known type, or e.g. composed of a magnet 99 (see Figure 4) positioned on the head 70, and a detector or field sensor 98 (see Figure 1) located in the motor body 30. The sensor sends a signal to a microcontroller, which processes it and extracts information about the condition of the shutter in each point of its stroke. The microcontroller during the movement of the shutter (the path of descent and ascent) controls the deviation Δ by means of the sensor, compare WO2007/051865.

The signal emitted by the sensor 98 identifies the relative angular position between the motor body 30 and the head 70 and is sampled and stored by the microcontroller during an initial installation procedure. The microcontroller has thus available for a dense series of points along the stroke of the shutter a sample of the sensor's signal. The set of samples forms a profile (or map) to which tolerances are associated according to the location of the stresses.

The microcontroller adopts specific different behaviors if the signal relative to the angular displacement, detected during successive movements, differs significantly from the reference value in memory that makes up the profile or map. The logic of the running program and operation of the operator can be the same as WO2007/051865.

The mechanical coupling between the motor body 30 and the head 70 occurs through the insertion of protruding elements or bulges or extensions of one inside concavities or seats present in the other. E.g. the seats can be formed from the space between the protruding elements or protuberances or extensions.

The sensor 99 can be housed inside a protruding element 32 or 72. The invention advantageously provides that the magnet or detector 98 is placed in the motor body 30, e.g. comprised in an electronic board (not shown) mounted inside the body 30.

In the example shown (see Figure 1 and 2):
- the protruding elements of the motor body 30, indicated with 32, are two and create between each other two seats or empty spaces 36;
- two protruding elements 72 of the head 70 create between each other two seats o empty spaces 76.

The protruding elements 72, 32 have the shape of a circular sector or tooth and extend toward each other parallel to the axis X. They have a section such that when the head 70 and the motor body 30 are coupled together and drawn near, the protruding elements of one are placed between those of the other, and occupy part of the concavity leaving some empty spaces.

In other words, the protruding elements 32 are inserted into the concavities (or seats) 76 and the protruding elements 72 are inserted into the concavities (or seats) 36. The measures and the width of the concavities 36, 76 compared to those of the protruding elements 32, 72 are designed to achieve such coupling, which creates the play Δ (angular displacement) between the motor body 30 and head 70.

The empty spaces between the protruding elements 32, 72 are occupied by elastic means 40, which are in direct contact with, and interposed between, facing surfaces 34, 74 of a protruding element 32 and of the adjacent one 72.

In general, an elastic means 40 is located between protruding elements that alternate circularly around the axis X. That is, taking a round around the X axis one encounters a protruding element 32, then a portion of or an elastic means 40, then a protruding element 72, then another portion of or an elastic means 40, and so on. In essence, between opposite protruding elements of the head 70 and of the motor body 30 there is interposed an elastic means.

This ensures the right equilibrium of the system by enabling the cancellation of the forces acting transversely to the axis X.

The shape, number and arrangement of the protruding elements can have in general many variations, and what is exposed here is generally valid for any configuration.

To have maximum symmetry and maximum stress balance with respect to the axis X it is preferred that the protruding elements of the head and the motor body have polar symmetry with respect to the axis X. To this aim the elastic means 40 has preferably a lobe 52 and corresponding lobes in diametrically opposite position with respect to an imaginary center represented by the axis X.

In this way, with a rotation motion of the gearmotor the twisting momentum or torque applied by the protruding elements 32 on the elastic means 40 will have diametrically opposite application points with respect to the rotation axis X, thereby eliminating each traversal force on the axis X tending to move/tilt it.

The empty spaces or gaps created between the protruding elements 32, 72 therefore form radial interstices (defined by the facing surfaces) filled with an elastic means.

The installation of the elastic means in the interstices can be simplified by making an elastic means in one-piece. In Figures 4-6 there is shown by 40 its preferred form, characterized by a substantially star-shape with four external lobes 52 arranged around a center of symmetry C and interconnected by a central ring 54. The lobes 52 and the ring 54 can be symmetrical to a plane passing through the center C (coinciding with the X axis) or two such planes orthogonal to each other. The lobes 52 extend radially outward from the ring 54, which could also be external to the lobes 52 (they would extend in that case from the internal edge of the ring toward its center).

The material used for the elastic means 40 can be of gummy type, with different mechanical properties according to e.g. the diameter of the motor, the torque developed by the motor and the weight of the shutter.

Since the head 70 is blocked in known manner to the wall W, when the gearmotor 20 is activated and moves the shutter in the direction of descent, the motor body 30 rotates (due to the torque generated by the weight of the roller shutter) and its protruding element 32 compress at least two opposite lobes 52 (shown with 52a in Figure 4) against two protruding elements 72.

The other two lobes 52 (also shown with 52b in Figure 4) are compressed in the case of rotation in the opposite direction. The amount of offset or angular displacement of the motor body 30 with respect to the head 70 depends on the mechanical properties of the elastic means 40, and on the weight and position of the roller shutter. In fact, the torsion force that discharges on the elastic means 40 increases during the first phase of descent, while it decreases when the roller shutter leans and discharges its weight on the windowsill

The dynamics of the stresses will be reversed during the rising phase of the roller shutter.

In Figures 5-6 and 7-11 are represented different versions of the elastic means 40. To change its dynamic elastic response
- each lobe 82 or pair of lobes 82 (Figure 7 and 9), adjacent or opposite, can be produced with two or more different materials,
- each lobe 84 or pair of lobes 84 (Figure 8), adjacent or opposite, can be produced with two different materials, and/or different from the adjacent lobe, e.g. in the case wherein only diametrically opposed lobes have same materials.

If a lobe is made of two different materials (Figure 8) its elastic properties can be better adapted to a particular application.

Between two lobes of those described there can be added a lip or tab 60 (see Figure 10 and 11, which as an example reproduces the variant in Figure 9), which serves to prevent that the end of the protruding elements (e.g. 72) hits the bottom of the concavity or seat (e.g. the one indicated with 36).

In this way the elastic means also works as "insulator" interposed between the head 70 and the motor body 30. In fact it absorbs and annuls possible vibrations that can propagate between the two components.

For each described variant the characteristics of the elastic means can be further modulated if the thickness of the lobes are differentiated. In Figure 5 thicker lobes are shown by 56, and thinner ones by 58, that do not completely fill the empty space between two protruding elements 32, 72. The aim is to obtain an elastic response of progressive type. In fact, with this variant at the beginning of the relative rotation between the motor body 30 and the head 70 only the lobe 56 is compressed, while with continued rotation the second lobe 58 gets compressed as well, thereby increasing the overall force exerted by the elastic means.

The elastic means 40 can have different structural conformations, e.g. with four lobes 52 (Figure 4) or six lobes 59 (Figure 6). To avoid empty spaces, it is preferred that the number of lobes be matched to an equal number of protruding elements, half of which are present on the head and the other half on the motor body (shown in Figure 6 respectively with 79 and 39).

Note that each of the lobes that make up the elastic means is or can go in direct contact on one single side (of its) with a protruding element of the head, and on an opposite side (of its) only with a protruding element of the motor body.

## Claims

1. Tubular operator (20) comprising
- a driver body (30) that extends along an axis (X) and contains an electric motor and a mechanical gearbox;
- a head (70) attachable to a fixed wall, wherein the driver body and the head are connected to each other at an end of theirs to form the operator,
the driver body and the head comprising at said end two protruding elements (32, 72) with the shape of a circular section extending toward each other parallel, and with polar symmetry, with respect to the axis (X) and defining concavities or seats (36, 76) between them,
the protruding elements of the head and the driver body extending parallel to the axis (X) from a main body integrally with it, and delimiting between each other said seats or cavities,
the concavities or seats having a width adapted to receive into their interior opposite protruding elements when the operator is assembled to allow for relative angular movement,
so that the driver body can rotate with respect to the head for a predetermined amount about the axis (X) thanks to a a small backlash,
the angular displacement of the motor body (30) with respect to the head (70) being monitored by detection means,
**characterized in that**
at least one elastic means (40), being interposed in a concavity or seat between a protruding element of the driver body and a protruding element of the head, comprising a single elastic component (40), having portions (52) that extend substantially in a radial manner with respect to the axis (X) and that are connected with each other by a ring coaxial to the axis (X), being arranged inside the concavities or seats.

2. Operator according to claim 1, wherein the elastic means (58) for leaving a residual angular play between two protruding elements has smaller dimensions than the distance between the protruding elements.

3. Operator according to any one of the preceding claims, comprising two elastic means (82), each placed between two different pairs of protruding elements, with different elastic properties.

4. Operator according to any one of the preceding claims, wherein an elastic means (84) is made up of at least two layers or parts of different elastic material.

5. Operator according to any one of the preceding claims, wherein two elastic means are made up of elastic materials different from each other.

## Patentansprüche

1. Röhrenförmiges Bedienungsgehäuse (20) bestehend aus
- einem Antriebskörper (30), der sich entlang einer Achse (X) erstreckt und einen E-Motor und ein mechanisches Zahnradgetriebe enthält;
- einem Kopf (70), der an einer fixen Wand befestigt werden kann, an der der Antriebskörper und der Kopf an ihren Enden miteinander verbunden werden und das Bediengehäuse bilden,
bei dem der Antriebskörper und der Kopf am genannten Ende zwei vorspringende Elemente (32, 72) mit der Form eines runden Abschnitts aufweisen, die parallel zueinander und polarsymmetrisch zur Achse (X) verlaufen und dazwischen Konkavitäten oder Aufnahmen (36, 76) bilden;
bei dem die Konkavitäten oder Aufnahmen eine anpassbare Weite zur Aufnahme der vorspringenden Gegenelemente im Inneren haben, wenn das Bediengehäuse für die Durchführung der betreffenden Winkelbewegung zusammengebaut wird;
sodass der Antriebskörper dem Kopf gegenüber dank eines kleinen Spiels für einen festgelegten Grad um die Achse (X) drehen kann;
bei dem die Winkelverschiebung des Motorkörpers (30) im Kopf (70) von Detektionsgeräten überwacht wird;
**dadurch gekennzeichnet, dass** es
mindestens eine elastische Vorrichtung (40) hat, die in eine Konkavität oder in eine Aufnahme zwischen einem vorspringenden Element des Antriebskörpers und einem vorspringendem Element des Kopfes zwischengelegt wird, und mit einem einzelnen elastischen Bauteil (40) mit Abschnitten (52) versehen ist, die sich im Wesentlichen radial zur Achse (X) ausdehnen und mithilfe eines koaxialen Rings miteinander und mit der Achse (X) verbunden sind, die sich in den Konkavitäten oder Aufnahmen befindet.

2. Bedienungsgehäuse nach Anspruch 1, bei dem die elastischen Vorrichtungen (58) für ein Restwinkelspiel zwischen zwei vorspringenden Elementen kleiner sind, als der Abstand zwischen den vorspringenden Elementen.

3. Bedienungsgehäuse nach einem der vorangehenden Ansprüche, bestehend aus zwei elastischen Vorrichtungen (82), von denen jede zwischen zwei verschiedenen vorstehenden Elementpaaren mit unterschiedlichen elastischen Eigenschaften positioniert ist.

4. Bedienungsgehäuse nach einem der vorangehenden Ansprüche, bei dem eine elastische
Vorrichtung (84) aus mindestens zwei Schichten oder Teilen aus unterschiedlichen elastischen Materialien besteht.

5. Bedienungsgehäuse nach einem der vorangehenden Ansprüche, bei dem zwei elastische Vorrichtungen aus elastischen Materialien bestehen, die voneinander abweichen.

## Revendications

1. Un organe de commande tubulaire (20) comprenant
- un corps moteur (30) qui s'étend le long d'un axe (X) et contient un moteur électrique et un réducteur mécanique ;
- une tête (70) susceptible d'être fixée à un mur stable, où le corps moteur et la tête sont raccordés l'un à l'autre à une de leurs extrémités pour former l'organe de commande,
le corps moteur et la tête comprenant à ladite extrémité deux éléments protubérants (32, 72) sous la forme d'une section circulaire. Ces éléments s'étendent l'un vers l'autre en parallèle et avec une symétrie polaire, par rapport à l'axe (X) et définissent entre eux des concavités ou sièges (36, 76),
les éléments protubérants de la tête et du corps moteur s'étendant parallèlement à l'axe (X) à partir d'un corps principal et intégralement avec lui, et délimitant entre eux lesdits sièges ou cavités,
les concavités ou sièges ayant une largeur adaptée pour recevoir en leur sein des éléments protubérants opposés, lorsque l'organe de commande est assemblé pour permettre un mouvement angulaire relatif,
de sorte que le corps moteur peut pivoter jusqu'à un certain point prédéterminé par rapport à la tête sur l'axe (X) grâce à un petit jeu,
le déplacement angulaire du corps moteur (30) par rapport à la tête (70) étant surveillé par un système de détection,
**caractérisé en ce que**
au moins un dispositif élastique (40) est interposé dans une concavité ou siège entre un élément protubérant du corps moteur et un élément protubérant de la tête et comprend un composant élastique individuel (40), ayant des parties (52) qui s'étendent fondamentalement d'une façon radiale par rapport à l'axe (X) et qui sont raccordées les unes aux autres par une bague coaxiale à l'axe (X), étant aménagées dans les concavités ou sièges.

2. Un organe de commande selon la revendication 1, dans lequel le dispositif élastique (58) a des dimensions plus petites que la distance entre les éléments protubérants afin de laisser un jeu angulaire résiduel entre deux éléments protubérants.

3. Un organe de commande selon n'importe laquelle des revendications précédentes, comprenant deux dispositifs élastiques (82), placés chacun entre deux paires d'éléments protubérants différentes, et dont les propriétés élastiques différent.

4. Un organe de commande selon n'importe laquelle des revendications précédentes, dans lequel un dispositif élastique (84) est composé au moins de deux couches ou parties de matière élastique différente.

5. Un organe de commande selon n'importe laquelle des revendications précédentes, dans lequel deux dispositifs élastiques sont composés de matières élastiques différentes.
